# EUROPEAN PATENT APPLICATION

(11) **EP 1 944 087 A1**
(43) Date of publication of application: **16.07.2008**
(21) Application number: 06796647.3
(22) Date of filing: 22.08.2006
(51) Int. Cl.: B02C 18/14, B02C 18/00, B02C 18/18

(54) **CRUSHER FOR SIZE-REDUCING MATERIAL AND METHOD FOR SIZE-REDUCING MATERIAL**

(30) Priority: 23.08.2005 JP 2005241242; 28.12.2005 JP 2005379504; 28.12.2005 JP 2005379503
(71) Applicant: Bridgestone Corporation, Tokyo 104-8340 (JP); Bridgestone Plant Engineering Co., Ltd., Kodaira-shi Tokyo 187-8531 (JP)
(72) Inventor: YANO, Eiji, Tokyo 2080035 (JP); TOMIYASU, Tetuya, Mizuma-machi, 8300111 (JP)
(74) Representative: Whalley, Kevin
(86) International application number: PCT/JP2006/316433
(87) International publication number: WO 2007/023823

(57) **Abstract**

Crushing finely the chipped rubber such as that of waste tire is done by further small number of crushers, and the capture rate of the target size of the rubber particles is improved.

With a crusher which finely crushes the chipped rubber (G) such as that of waste tire, the chipped rubber (G) is supplied to a crusher (10a) structured by a rotating roll (12) having relatively rough groove pitch and pluralities of fixed blades (14) each of which has pluralities of grooves forming crushing edges, thus conducting crushing. The rubber particles (G) discharged from the crusher (10a) are again supplied to the crusher (10a) to repeat the crushing to conduct rough-finishing operation. Then, thus roughly-finished rubber particles (G) are treated by similar crushing operation using a rotating roll (10b) having relatively small groove pitch to conduct finish treatment. The finely-crushed rubber particles are classified using a sieve (16) to specified size ranges.

## Description

### Technical Field

The present invention relates to a crusher for finely crushing a solid body using a roll and a fixed blade and to a method for finely crushing thereof, and also relates to a crusher which allows adjusting gap between peripheral face of a rotating roll and tip of the fixed blade at individual crushing edges structuring the fixed blade, and further to a crusher equipped with a chute which can improve the efficiency of biting the solid body (the biting amount per unit period of time).

### Background Art

For instance, a solid body such as rubber material separated from waste tire is crushed for powder treatment in order to reclaim the solid body.

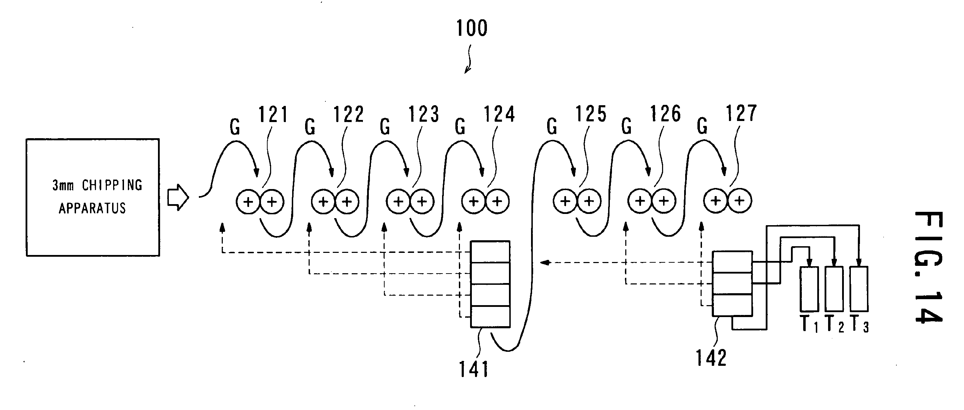

Figure 14 illustrates a finely-crushing apparatus using a conventional crusher, though the illustrated apparatus does not appear in patent documents.
For finely crushing solid body such as waste tire, the waste tire or the like is supplied to a chipping apparatus for pulverizing, where the wires and fibers are removed from the waste tire, thus obtaining chips having sizes of about 3 mm.
The obtained chips of about 3 mm in size are then supplied to a pulverizing apparatus composed of multistage crushers, each of the crushers is structured by a pair of rolls having irregular surface for pulverization, where the chips are finely crushed to approximate sizes of #100 (0.14 mm) to #200 (0.07 mm), then they become a reclaimed resource.

Referring to Fig. 14, the chipped rubber G prepared by the above-described chipping apparatus is supplied to and pulverized in the pulverizer 100 equipped with a pair of rolls. At the peripheral face of each roll, there is formed an irregular surface in a uni-directional groove stripe pattern or a crossing-directional groove stripe pattern, created by knurling, an irregular surface in a spiral groove pattern, or an irregular surface created by spraying diamond powder thereon.
Each roll of the individual pair rolls 121 to 127 rotates in the opposite direction from each other, thus finely crushing the chipped rubber G supplied onto the mating face of the irregular surface of both rollers. The crushed chipped rubber G is then supplied to a pair of rollers of the succeeding stage, where the chipped rubber G is crushed to further small size. In the crushing treatment stage, the repeated treatment of crushing is given to provide powdery rubber particles having sizes of about #100 (0.14 mm) to about #200 (0.07 mm), which are suitable for the reclaimed resource.

In the above crushing treatment stage, the rubber particles are introduced into a sieve 141 which is adequately positioned between the roller pairs 124 and 125, where the rubber particles are sieved and classified into the respective particle size ranges. The sieve 141 has pluralities of screens having different opening sizes, for example, has four stages of screens having different opening sizes to classify the finely crushed rubber particles. As of the rubber particles, the ones passed the screen with the minimum opening are recovered as the rubber particles finely crushed to the target size in the preceding crushing treatment, or to the necessary size, and they are supplied to succeeding stage of roller pair 125 for further finely crushing.

Remained rubber particles are recovered at each of the screens, or at each of the size ranges. They are, also with the finally remained ones, supplied to the respective stages of roller pairs depending on the particle size ranges. For example, in the pulverization apparatus of Fig. 14, the rubber particles passed up to the screen of the second stage sieve 141 are supplied to the fourth stage roller pair 124, and the ones passed up to the screen of a third stage sieve are supplied to the third stage roller pair 123. Similar procedure is repeated depending on the particle size range to return to the preceding stage crushing roll pairs 122 and 121, thus applying crushing treatment again. In this way, the crushing is repeated until the rubber particles become the target size.

The chipped rubber G which passed the first sieve 141 passes through the pluralities of stages of crushing roll pairs 125 to 127 for further finely crushing thereof, and at the final sieve, or a second sieve 142 in the example of Fig. 14, they are classified into the respective size ranges, and are stored in the respective storage tanks T1 to T3.
According to the example of Fig. 14, the storage tank T1 holds the particles coarser than #100 (0.14 mm), the storage tank T2 holds the particles of #100 under and #200 (0.07 mm) over, and the storage tank T3 holds the particles of #200 under, for example.
To increase the capture rate of the particles finely crushed to the target size, as of the particles classified in the second sieve 142, the particles which are coarser than the target size may be recycled to any of the preceding stage crushing roll pairs 125 to 127, depending on the particle size, to conduct crushing treatment again instead of holding them in the storage tanks T1 and T2.

According to the above-described conventional finely crushing apparatus, the crushing zone is limited to a position of contacting the mating rotating rolls, or limited to a single position. Accordingly, even the chipped rubber G passes between the pair of rolls, the crushing proceeds not much. As a result, many roll pairs are arranged in multiple stages as described above, and the crushing is repeatedly given. Consequently, the apparatus becomes large, and a problem of increased cost arises. Furthermore, in the crushing treatment of an elastic body induces crimping of the elastic body during the progress of crushing, which also raises a problem of decreased capture rate of elastic body after finely crushed to the target size.

### Disclosure of the invention

### Problems to be Solved by the invention

The first object of the present invention is to decrease the size of entire apparatus in the conventional case of finely crushing a solid body such as rubber of waste tire, thereby decreasing the investment cost. The second object of the present invention is to improve the capture rate of solid body which is finely crushed to the target size through finely crushing further efficiently by preventing the coagulation of finely-crushed particles.
The third object of the present invention is also to improve the capture rate of the finely-crushed solid body by suppressing the generation of crimping of the solid body, which crimping interferes finely crushing the solid body.
The fourth object of the present invention is to provide a crusher for finely crushing a solid body, composed of a rotating roll and a fixed blade positioned facing the rotating roll, wherein the rotating roll has pluralities of grooves on the peripheral face of the roll, being arranged in rows extending in the direction of rotation axis, and the fixed blade has pluralities of crushing edges arranged on a circumferential plane facing the peripheral face of the rotating roll, where the gap between the peripheral face and each of the crushing edges, (blade contact), is able to be adjusted.
The fifth object of the present invention is to improve the efficiency of biting solid body using a simple structure chute on a crusher, which crusher has a rotating roll having pluralities of grooves on the peripheral face, being arranged in rows extending in the rotation axis direction, a fixed blade having pluralities of crushing edges arranged along a circumferential plane facing the peripheral face of the rotating roll, and a chute which makes the crushing object drop by sliding therein toward the end of the fixed blade at the downstream side in the rotating direction of the rotating roll. Means to Solve the Problems

The invention according to claim 1 is a crusher finely crushing a solid body, which crusher is composed of a rotating roll and a fixed blade facing the rotating roll, wherein the rotating roll has grooves arranged at an equal spacing on the peripheral face thereof extending in the direction of the rotation axis thereof, and the fixed blade has pluralities of grooves arranged at an equal spacing on a circumferential plane facing the peripheral face of the rotating roll, thus forming pluralities of crushing edges, thereby crushing the solid body supplied between the rotating roll and the fixed blade during the rotation of the rotating roll.
The invention according to claim 2 is the crusher of claim 1, wherein the pluralities of fixed blades are arranged in row facing the peripheral face of the rotating roll.
The invention according to claim 3 is the crusher of claim 1 or claim 2, wherein the rotating roll and the fixed blade are arranged not to substantially induce a gap between the faces of the rotating roll and the fixed blade facing with each other.
The invention according to claim 4 is the crusher of any of claims 1 to 3, wherein the groove of the fixed blade has a cross sectional shape to increase the depth in the direction of driving the solid body which is supplied between the rotating roll and the fixed blade from the circumferential plane of the fixed blade facing the peripheral face of the rotating roll, and to end at a wall face formed in the direction passing through the center of the rotating roll.
The invention according to claim 5 is the crusher of claim 4, wherein the width of the crushing edge of the fixed blade facing the rotating roll is smaller than the pitch of the grooves on the fixed blade.
The invention according to claim 6 is the crusher of claim 5, wherein the width of the crushing edge is from 0.5 to 5 mm, and the pitch of the grooves is from 1 to 20 mm.
The invention according to claim 7 is a crusher which has a rotating roll having pluralities of grooves on the peripheral face thereon arranged in rows in the circumferential direction thereof, and extended in the direction of the rotation axis, a fixed blade composed of separate pluralities of fixed blade segments, each of which is equipped with one or more crushing edges, along a circumferential plane facing the peripheral face of the rotating roll, and a means to adjust the gap between the fixed blade and the peripheral face of the rotating roll facing thereto by displacing the fixed blade segment against the peripheral face of the rotating roll.
The invention according to claim 8 is the crusher of claim 7, wherein the means to adjust the gap has an actuator which is driven by hydraulic pressure or motor to conduct linear movement.
The invention according to claim 9 is the crusher of claim 8, wherein a common elastic body is inserted between the root of all the fixed blade segments and a single actuator.
The invention according to claim 10 is the crusher of claim 8, wherein individual actuators are arranged at the respective roots of the fixed blade segments.
The invention according to claim 11 is the crusher of claim 7, wherein the means to adjust the gap is a bolt positioned at each root of the fixed blade segments.
The invention according to claim 12 is a crusher which has a rotating roll having pluralities of grooves on the peripheral face thereof arranged in rows in the circumferential direction thereof, and extended in the direction of the rotation axis, a fixed blade composed of pluralities of crushing edges arranged along a circumferential plane facing the peripheral face of the rotating roll, and a chute which makes the crushing object drop by sliding therein toward the backward end of the fixed blade in the rotating direction of the rotating roll, wherein the gap between the guide plane of the chute facing the peripheral face of the rotating roll to make the crushing object drop by sliding thereon and the peripheral face of the rotating roll is formed to shrink in the forward direction of rotation.
The invention according to claim 13 is the crusher of claim 12, wherein the guide plane has pluralities of grooves extending in the direction of upper end and lower end thereof in rows from left to right thereof.
The invention according to claim 14 is the crusher of claim 12, wherein a means to adjust gap for displacing the chute so as to vary the gap between the guide plane and the peripheral face of the rotating roll.
The invention according to claim 15 is the crusher of claim 14, wherein the means to adjust gap is a means to swing the chute around the swing axis parallel to the axis of the rotating roll.
The invention according to claim 16 is a method for finely crushing a solid body, which method has the steps of: supplying a chip-shaped solid body to a crusher composed of a rotating roll and a fixed blade; crushing the solid body discharged from the crusher by re-charging to the crusher; repeating the crushing step for the re-charged solid body for specified times, and then classifying the crushed solid body discharged from the crusher depending on the particle sizes; and storing the classified crushed solid body.
The invention according to claim 17 is the method for finely crushing the solid body of claim 16, wherein the step of crushing further has the steps of: rough-finishing by crushing treatment using a rotating roll having grooves thereon with a groove width for rough-finishing on the rotating roll; and finishing by crushing treatment using a rotating roll having grooves thereon with a groove width for finishing, narrower than the groove width for rough-finishing, wherein the step of rough-finishing and the step of finishing are conducted by a specified number of stages of crushers, respectively.
The invention according to claim 18 is the method for finely crushing the solid body of claim 16 or claim 17, wherein the step of crushing further has the step of adding an anti-coagulation agent.

### (Working)

According to the present invention, followings are attained.
(1) A single unit of crusher can crush the target solid body for several times.
(2) The capture rate of the solid body particles which are finely crushed to a target particle size is improved.
(3) There is available adjustment of gap between the fixed blade segment and the peripheral face of the rotating roll.
(4) The solid body being crushed, which is supplied to the chute, can be dropped by sliding therein to gradually come close to the downstream side in the rotating direction of the rotating roll on the peripheral face, thereby assuring being bitten by the fixed blade while moving in the gap between the peripheral face of the rotating roll and the guide plane of the chute.

### Effect of the Invention

According to the present invention,
(1) since a single unit of crusher can crush a solid body for pluralities of times, efficient crushing is available, and there is no need of arranging pluralities of crushers as in the case of conventional finely crushing apparatus, which attains reduction of investment cost and installation space. Also the present invention readily improves the capture rate of the particles of solid body which are finely crushed to the target size;
(2) the gap of individual crushing edges structuring the fixed blade can be adjusted by dividing the fixed blade into fixed blade segments each of which having one or more crushing edges, and by allowing each of the fixed blade segments to displace against the peripheral face of the rotating roll; and
(3) the efficiency of biting the solid body being crushed is improved by adopting a chute which has a simple shape of shrinking in the distance between the guide plane and the peripheral face of the rotating roll at downstream side in the rotating direction.

### Brief Description of the Drawings

[Fig. 1] Figure 1 illustrates an embodiment of a crusher for finely crushing solid body according to the present invention.
[Fig. 2] Figure 2A is a cross sectional view of a crusher according to an embodiment of the present invention, and Fig. 2B is an enlarged view of the groove portion of Fig. 2A to illustrate the groove shape.
[Fig. 3] Figure 3 is a cross sectional view of a crusher of an embodiment of the present invention to illustrate a presumable crushing phenomenon on crushing chipped rubber using a rotating roll and a fixed blade.
[Fig. 4] Figure 4 is a graph showing the result of test for a crusher of fixed blade type using a single fixed blade according to an embodiment of the present invention, and for a conventional crusher of roll type. The axis of ordinates is the mean particle size of rubber particles, and the axis of abscissas is the number of crushing cycles.
[Fig. 5] Figure 5 is a graph showing the experimental result to grasp the variations of capture rate with the addition of anti-coagulation agent during the crushing stage.
[Fig. 6] Figure 6A is a graph showing the crushing capacity for two fixed blades (two blades) and for single blade (one blade). Figures 6B and 6C are each a schematic cross sectional drawing of the crusher 10 with one blade and two blades, respectively.
[Fig. 7] Figure 7 shows a cross sectional view of the means to adjust gap on the crusher according to the first embodiment of the present invention.
[Fig. 8] Figure 8 shows a cross sectional view of the means to adjust gap on the crusher according to the second embodiment of the present invention.
[Fig. 9] Figure 9 shows a cross sectional view of the means to adjust gap on the crusher according to the third embodiment of the present invention.
[Fig. 10] Figure 10 shows a cross sectional view of the means to adjust gap on the crusher according to the fourth embodiment of the present invention.
[Fig. 11] Figure 11A illustrates the total structure of the chute according to an embodiment of the present invention, and Fig. 11B shows an enlarged view of the chute at front end portion thereof.
[Fig. 12] Figure 12A shows a rough cross sectional view of a plate-shape (dustpan shape) chute located against the crusher. Figure 12B shows a rough cross sectional view of a chute equipped with a pusher located against the crusher.
[Fig. 13] Figure 13 is a graph showing the observed results of biting amount in the crusher according to the present invention and in the conventional crusher.
[Fig. 14] Figure 14 illustrates a finely-crushing apparatus using a conventional roll type crusher.

### Description of the Reference Symbols

10: crusher
11: brush
12: rotating roll
12a: groove (edge)
14: fixed blade
14a: groove (crushing edge)
14-1 to 14-5: fixed blade segment
15, 15-1 to 15-5: piston-cylinder mechanism
16: hydraulic cylinder
16a, 16b: port of hydraulic cylinder
17: piston rod
18: pressing member
19: rubber block
20: casing
21-1 to 21-5: adjustment bolt
22: cassette
23: bracket
24: fixed blade segment
24a: crushing edge
24b: holder
25: chute
26: root portion
27: front end portion
28: swing bearing
29: guide plane
30: groove
31: plate-shape (dustpan shape) chute
32: chute equipped with pusher
33: piston-cylinder mechanism
34: pusher
100: crusher
121 to 127: roll pair
141, 142: sieve
P: width of crushing edge tip
Q: pitch of grooves
S: tapered face
T₁ to T₃: storage tank

### Best Modes for Carrying Out the Invention

The embodiments of the crusher according to the present invention are described below referring to the drawings.

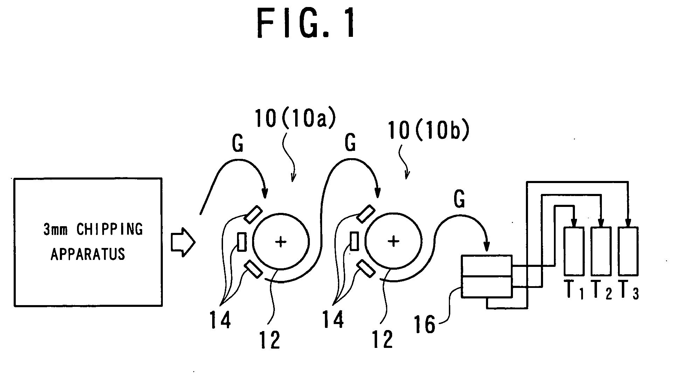

Figure 1 illustrates a crusher according to an embodiment. According to the embodiment, the crusher 10 is structured by a rotating roll 12 composed of a single roll, and pluralities, for instance three, of fixed blades 14. The crusher 10 is installed by more than one stage, two in the embodiment. The rubber particles finely crushed by the crushers 10a and 10b are finally classified in sizes by a sieve 16, which classified rubber particles are held in the respective storage tanks T1, T2, and T3, depending on the size ranges as in the case of conventional process.

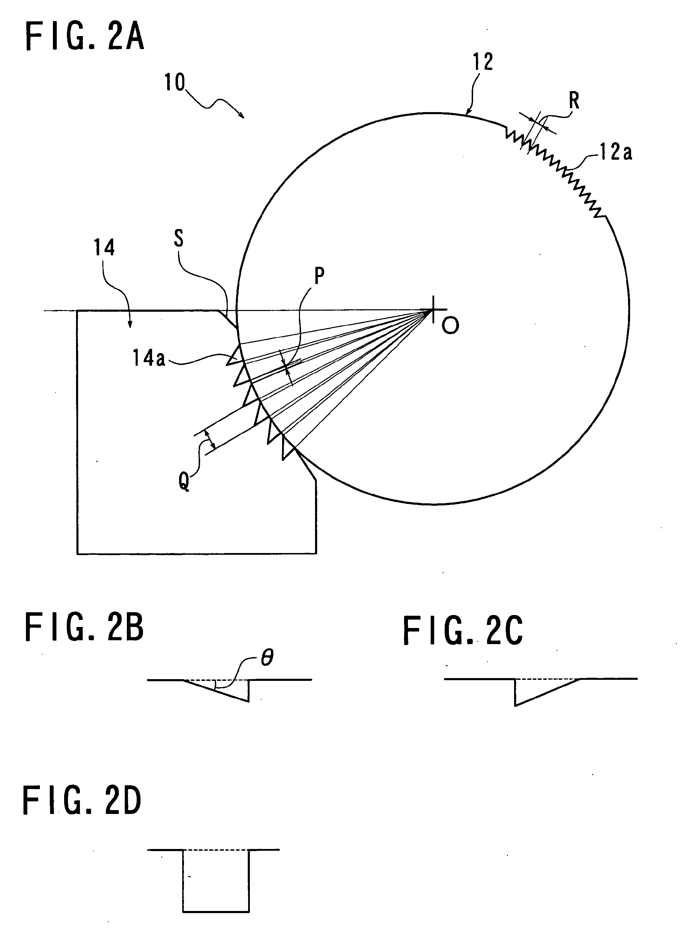

Figure 2A is a cross sectional view of the crusher 10 according to the embodiment, and Fig. 2B is an enlarged view of the groove portion of Fig. 2A. As seen in the figure, the crusher 10 is structured by the rotating roll 12 and the fixed blade 14. The rotating roll 12 has pluralities of grooves 12a with an equal spacing on the surface of the roll. The grooves 12a are for example, similar to the conventional ones, formed in a cross-directional stripe pattern created by knurling on the surface of the rotating roll 12. When the grooves 12a are formed in a uni-directional stripe pattern, the rubber generates crimp thereon during crushing so that the embodiment adopts the grooves in cross-directional stripe pattern.

The face of the fixed blade 14 facing the peripheral face of the rotating roll 12 is formed on a circumferential plane having almost equal diameter to that of the peripheral face of the rotating roll 12, and the circumferential plane has grooves (or crushing edges) 14a at equal spacing.

The groove 14a on the fixed blade 14 is formed as the crushing edge in a cross sectional shape of saw-tooth, integrated with the fixed blade, as shown in the figure. The grooves 14a are arranged at an equal spacing along the circumferential plane, six of them in the embodiment. The groove pitch Q is from 1 to 20 mm, preferably 6 mm. If the groove pitch exceeds 20 mm, crimping is generated. The portion between the groove wall of a groove 14a and the point of beginning of the next groove is formed in a shape of circumferential plane. The width of the circumferential plane, (width of the crushing edge), P is from 0.5 to 5 mm, preferably from 1 to 2 mm. If the width of the circumferential plane is larger than above, for example 6 mm, the rubber crimping is generated.

The shape of the groove 14a on the fixed blade 14 is formed so as the groove wall face at the moving side of the supplied crushing solid body, for example, chipped rubber or particles G of waste tire, to position on a line extending from the center O of the rotating roll 12 toward the tip of the groove, as shown in the figure, thus the groove 14a becomes deep in the rotating direction of the rotating roll 12, as shown in Fig. 2B. As illustrated in Fig. 2B, the groove 14a preferably has an acute angle for the tilt angle θ of the bottom of the groove against the circumferential plane. If the tilt angle of the groove 14 is reversed from above, as shown in Fig. 2C, the rubber becomes crimping during crushing to fail in finely crushing, which is unfavorable. If the groove 14a is formed in rectangular cross section, as shown in Fig. 2D, the rubber becomes crimping at the corner of the groove, which is also unfavorable.

The gap between the rotating roll 12 and the fixed blade 14 is preferably zero, or in light contact therebetween because the presence of gap induces crimping. To do this, it is preferable that the straightness of the rotating roll 12 against the fixed blade 14 is 0, that is, the rotation axis of the rotating roll 12 is completely parallel to the facing surface of the fixed blade 14. If they are not completely parallel with each other, a gap is formed between them, thus inducing crimping as described above.
The feed opening of the chipped rubber or rubber particles G is formed in a tapered face S, as shown in Fig. 2A. This tapered shape allows better biting of chipped rubber G than the case of straight-shape feed opening. The pitch R of the grooves 12a on the rotating roll 12 is #6 to #25 for rough-finish, and #26 to #59 for finish. For example, #5 is excessively coarse, which fails in reducing the size of chipped rubber G, and #60 is excessively fine, which induces crimping.

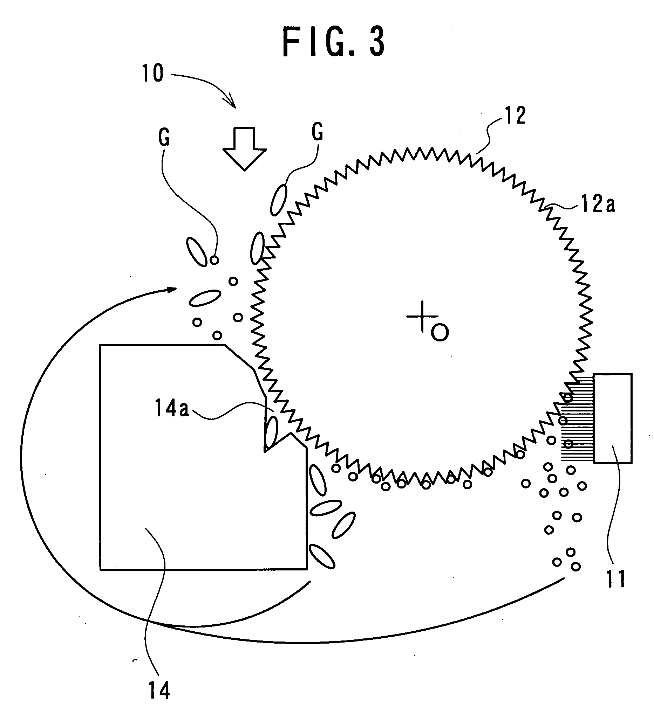

Figure 3 is a rough cross sectional view of a crusher to illustrate a presumable crushing phenomenon on crushing the chipped rubber G using the rotating roll 12 and the fixed blade 14. As illustrated in the figure, the chipped rubber G is supplied between the rotating roll 12 and the fixed blade 14, and is crushed by shearing force in the passage between the rotating roll 12 and the fixed blade 14. The crushing is given repeatedly at each fixed blade 14 by the number of grooves 14a on the fixed blade 14.
The size of the crushed chipped rubber G resulted from the crushing of a single fixed blade 14 is not even. The chipped rubber G in relatively large size immediately drops when it leaves the fixed blade 14, while the chipped rubber G in relatively small size remains in the groove 12a of the rotating roll 12 , and continues to rotate together with the rotating roll 12, then finally it is scraped out by a brush 11 located at almost opposite side to the fixed blade 14. The crusher 10 collects the dropped chipped rubber G to recycle to the inlet to repeat the crushing treatment. With the procedure, the mean particle size of the finely crushed rubber particles G presumably comes close to the target size.

Referring again to Fig. 1, the crusher 10 of the embodiment has three fixed blades 14 surrounding the rotating roll 12. To each fixed blade 14, there are formed pluralities of, five or more for example, grooves 14a (Fig. 2).
Accordingly, compared with the conventional crusher 100 shown in Fig. 14 giving a single crushing operation for each roll, the crusher 10 has three fixed blades 14, each of which is equipped with, for example 5 or more, grooves 14a surrounding the rotating roll 12 so that a single crushing treatment of a single crusher 10 gives 15 or more cycles of crushing.

According to the embodiment therefore, two stages of crusher 10 are arranged, and a chipped rubber G of waste tire discharged from a known 3 mm chipping apparatus is supplied to the first stage crusher 10a. The first stage crusher 10a conducts rough crushing using a roll having #20 (0.9 mm) of groove pitch R (Fig. 2) as the rotating roll 12 to finely crush the chipped rubber G to #100 (0.14 mm) in size. Thus roughly-crushed chipped rubber or rubber particles G are supplied to the second stage crusher 10b which has the roll with #40 (0.9 mm) of groove pitch R to conduct finish crushing to #200 (0.07 mm) in size.
The above description adopts the finely crushing apparatus applying two stages of crushers for rough crushing and finish crushing, respectively, the sieve 16 for classification, and the storage tanks T1, T2, and T3 for receiving the classified particles. The structure of the present invention is not limited to the one described above, and for example as the conventional finely crushing apparatus given in Fig. 14, each of the rough crushing and the finish crushing may have pluralities of stages of crushers, or the sieve 16 may be positioned therebetween to classify the rubber particles G, and the classified rubber particles G may be recycled to the preceding crusher depending on the particle size to repeat the crushing treatment.

An experiment for finely crushing the solid body using the crusher 10 according to the embodiment is described below.

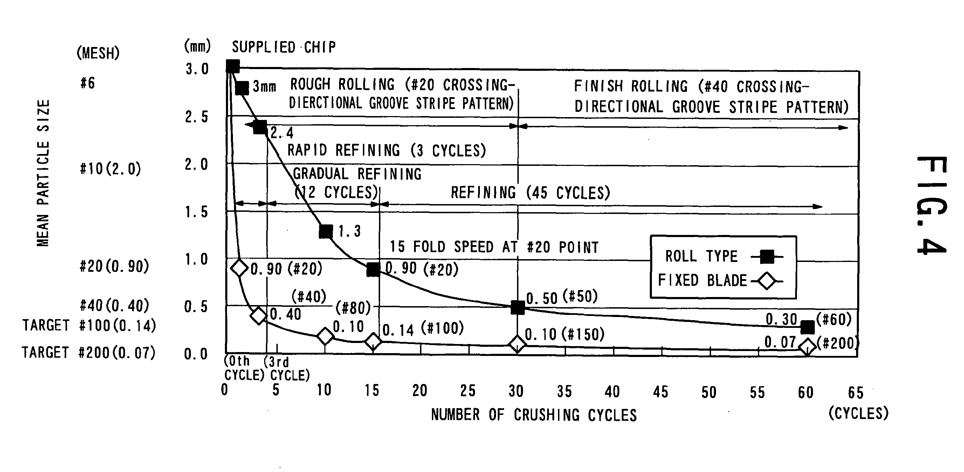

Figure 4 is a graph showing the result of test for the crusher 10 of fixed blade type using a single fixed blade 14 having four grooves against the rotating roll 12 according to the present invention, and for the conventional crusher 100 of roll type described in relation to Fig. 14. The axis of ordinates is the mean particle size of rubber particles, and the axis of abscissas is the number of crushing cycles.

As shown in the graph, when chipped rubber of 3 mm in particle size was crushed, the number of crushing cycles necessary to refine the particles to #40 (0.4mm) in size was three for the crusher 10 of the present invention, while that for the conventional roll type needed about 30.
When the crusher 10 conducted further 12 cycles of crushing (total 15 cycles), the rubber particles were finely crushed from #40 to #100 (0.14 mm), and with further 45 cycles of crushing (total 60 cycles), the particle size became as fine as #200 (0.07 mm) or smaller.

To the contrary, with the conventional roll-type crusher 100, the 30 cycles of crushing gave #40 (0.4 mm) of particle size, and 60 cycles of crushing gave #60 (0.3 mm) of particle size, which failed to attain the target #200 size, not even to attain #100 size.
Thus, the finely-crushing ability of the crusher 10 is proved.

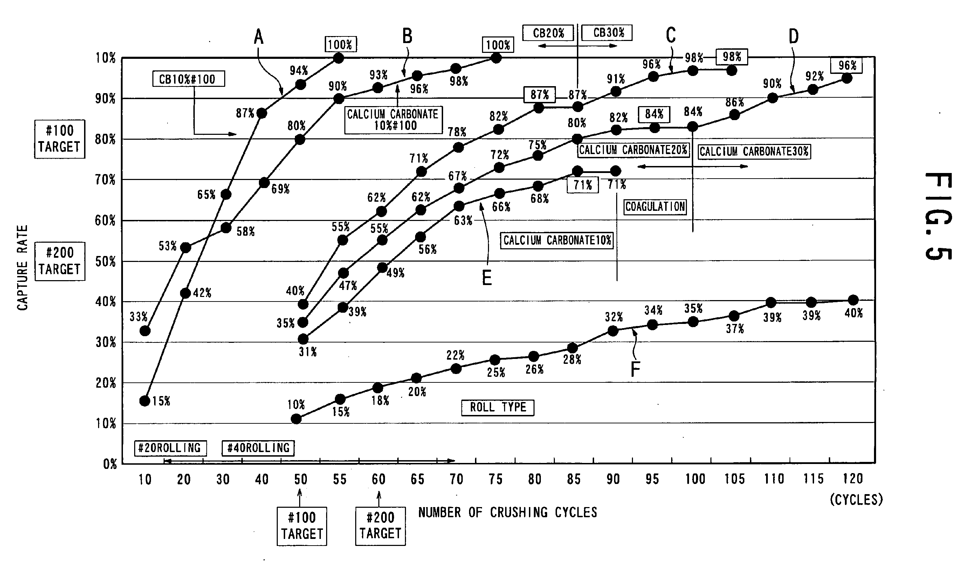

Figure 5 is a graph showing the experimental result to grasp the variations of capture rate of finely-crushed rubber particles with the addition of anti-coagulation agent during the crushing stage. The anti-coagulation agent adopts calcium carbonate and carbon, respectively. The axis of ordinates is the capture rate of the finely crushed rubber particles, and the axis of abscissas is the number of crushing cycles.
According to the experiment, when the anti-coagulation agent was added by an amount of 10%, the rotating roll having #20 of groove pitch R was used to conduct crushing for five cycles, then the anti-coagulation agent was added by the amount of 10% to begin the 10th cycle of crushing, from which 10th cycle the observation began. When the anti-coagulation agent was added by an amount of 20%, the rotating roll having #20 of groove pitch R was used to conduct crushing for 30 cycles, then the anti-coagulation agent was added by the amount of 20% to begin the 50th cycle of crushing, from which 50th cycle the observation began.

The curve A in the figure is the capture rate of the rubber particles having #100 particle size with the addition of carbon by 10% as the anti-coagulation agent. The curve B therein is the capture rate of the rubber particles having #100 particle size with the addition of calcium carbonate by 10% as the anti-coagulation agent.
Similarly, the curve C is the capture rate of the rubber particles having #200 particle size with the addition of carbon by 20%, and the capture rate thereof with the increased addition of carbon to 30%. The curve D is the capture rate of the rubber particles having #200 particle size with the addition of calcium carbonate by 20%, and the capture rate thereof with the increased addition of calcium carbonate to 30%.
The curve E is the capture rate of the rubber particles having #200 particle size with the addition of calcium carbonate by 10%, and the curve F is the capture rate of rubber particles having #200 particle size using the conventional roll-type crusher.

Table 1 summarizes the number of crushing cycles and the capture rate for each of #100 and #200 particle sizes in the cases of the addition of anti-coagulation agent of calcium carbonate and carbon by amounts of 10%, 20%, and 30%, respectively.

**[Table 1]**

| Particle size | Item | Target | Anti-coagulation agent | | | | | |
|---|---|---|---|---|---|---|---|---|
| | | | Calcium carbonate | | | Carbon | | |
| | | | 10% | 20% | 30% | 10% | 20% | 30% |
| #100 under | The number of cycles | - | 75 | - | - | 56 | - | - |
| | Capture rate | 80% | 100% | - | - | 100% | - | - |
| #200 under | The number of cycles | - | 85 | 95 | 120 | - | 80 | 105 |
| | capture rate | 50% | 71% | 84% | 96% | - | 87% | 98% |

As shown in Fig. 5, when carbon was added by an amount of 10% as the anti-coagulation agent, the capture rate of rubber particles of #100 size became 100% at about more than 55th cycle of crushing, as shown in curve A. When calcium carbonate was added by an amount of 10% as the anti-coagulation agent, the capture rate became 100% at about 75th cycle of crushing, as shown in curve B.

When carbon was added by an amount of 20% as the anti-coagulation agent, the capture rate of rubber particles of #200 size stopped at 87% at about 80th cycle of crushing, as shown in curve C. When, however, the addition of carbon increased to 30%, the capture rate became 98% at about more than 100th cycle of crushing. When calcium carbonate was added by an amount of 20% as the anti-coagulation agent, the capture rate of rubber particles stopped at 84% at 95th cycle of crushing, as shown in curve D. When, however, the addition of calcium carbide increased to 30%, the capture rate became 96% at about more than 120th cycle of crushing. When the addition of calcium carbide was decreased to 10%, the capture rate became 71% at about more than 90th cycle of crushing, as shown in curve E, and further increased number of cycles did not increase the capture rate. For reference, the roll-type crushing stopped the capture rate at 40% at 120th cycle of crushing.

The above experiment revealed the following.
(1) Conventional roll-type crushing gives gradual increase in the capture rate in spite of the increase in the number of crushing cycles. To the contrary, the embodiment using the fixed blade type gives a capture capacity of about 2.5 times that of the roll-type crushing.
(2) The capture rate in the embodiment achieves significantly higher than the target value for particle sizes of both #100 under and #200 under.
(3) For #100 particles, 100% capture is attainable. For #200 particles, almost 100% capture rate is attained by adding the anti-coagulation agent.
(4) As for the anti-coagulation agent comparing carbon with calcium carbonate, the case of carbon can decrease the number of crushing cycles by about 20 to obtain the rubber fine particles having the same size.

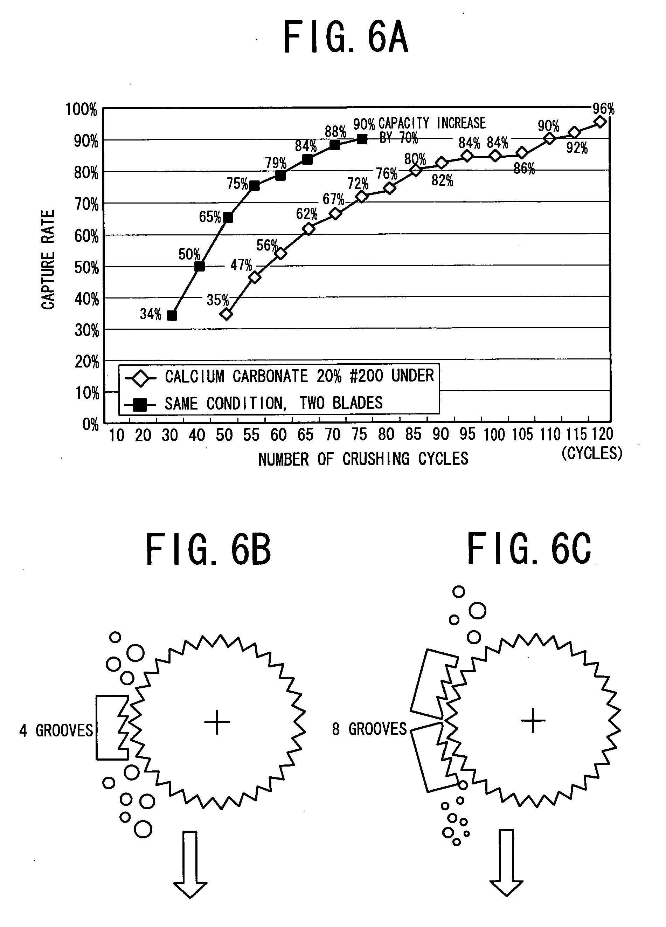

Figure 6A is a graph showing the crushing capacity for the case of increased number of fixed blades 14, or two-fixed blades (two blades), and for the case of single blade (one blade), in the case of 20% addition of calcium carbonate as the anti-coagulation agent. The axis of ordinates is the capture rate of fine particles of smaller than #200, and the axis of abscissas is the number of crushing cycles. Figures 6B and 6C are each a schematic cross sectional drawing of the crusher 10 with one fixed blade 14 (Fig. 6B) and two fixed blades (Fig. 6C), respectively.
As seen from the graph, for example, the case of two blades attained the capture rate of 84% at 65th crushing cycle. For the case of single blade, however, the capture rate stopped at 62% at the same number of crushing cycles, and there needed 95 cycles of crushing to attain 84% capture rate. The result shows that the crushing capacity of two blades improves the capture capacity by about 70% compared with that of the case of single blade.
Therefore, three or more blades improve more the crushing capacity.

As described above, compared with the conventional finely crushing apparatus of roll type, the finely crushing apparatus using the fixed-blade type crusher according to the present invention can decrease significantly the number of crushers, which expects to considerably decrease the cost and the installation space.

For the means to adjust the gap between the peripheral face of the rotating roll 12 and the tip of the fixed blade 14, (blade contact), in the above-described crusher, the description is given below referring to the drawings.
According to the crusher of the embodiment, the fixed blade 14 thereof has separately-arranged pluralities of fixed blades segments, each of which has one or more crushing edge, along a circumferential plane facing the peripheral face of the rotating roll 12. The respective fixed blade segments are independently displaced against the peripheral face of the rotating roll 12, thereby allowing the gap between the peripheral face of the rotating roll 12 and the tip of the fixed blade 14 to adjust lightly contacting with each other.

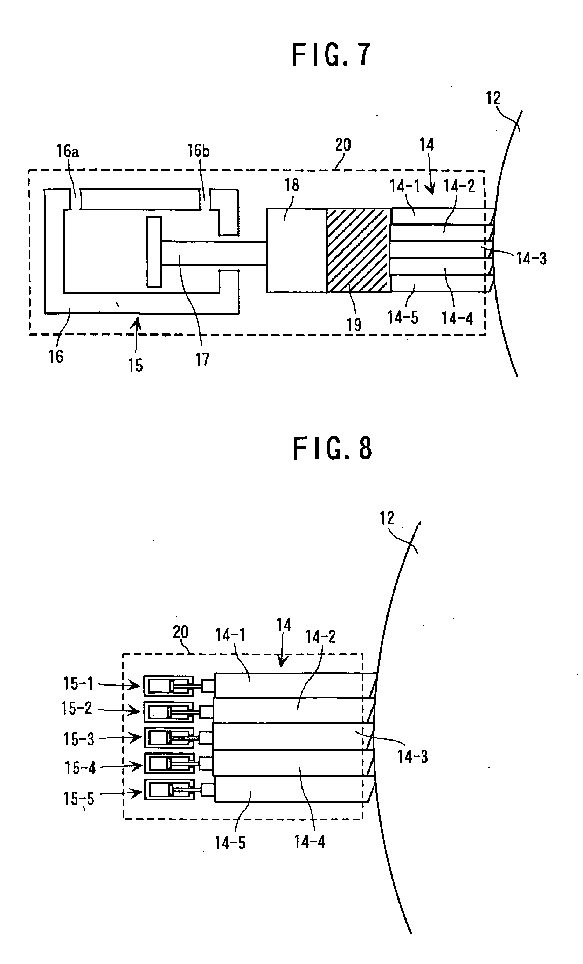

Figure 7 shows a cross sectional view of the means to adjust gap on the crusher for illustration according to the first embodiment. The fixed blade 14 is divided into pluralities (five in this case) of fixed blade segments 14-1 to 14-5. Each of the fixed blade segments 14-1 to 14-5 is positioned in stacking shape each other along the periphery of the rotating roll 12. A single crushing edge formed on each tip of the fixed blade segments 14-1 to 14-5 has a structure which was described before referring to Fig. 2A and Fig. 2B.

The gap between the tip of each crushing edge of each of the fixed blade segments 14-1 to 14-5 and the peripheral face of the rotating roll 12 is adjusted by a piston-cylinder mechanism 15. The piston-cylinder mechanism 15 has the double-action hydraulic cylinder 16 having two ports 16a and 16b, and a piston rod 17 moving inside the cylinder 16. At the front end of the piston rod 17, there is fixed a pressing member 18 made of a rigid body such as metal in a rectangular parallelepiped shape. Between the front end face of the pressing member 18 and the root face of the fixed blade segments 14-1 to 14-5, there is adhered, by inserting, a rubber block 19 in a rectangular parallelepiped shape.

The fixed blade 14, the piston-cylinder mechanism 15, the pressing member 18, and the rubber block 19 are contained in a casing 20. The cylinder 16 is supported by a supporting means (not shown) not to move inside the casing 20, and the fixed blade 14 is supported by the supporting means not to move except in the moving directions of the piston rod 17.

With the crusher having the structure of Fig. 7, the adjustment of gap between the peripheral face of the rotating roll 12 and the tip of the fixed blade 14 is given by adjusting the moving position of the piston rod 17 by supplying a pressing oil under a specific pressure from a pressing oil supply source (not shown) to ports 16a and 16b of the hydraulic cylinder 16. The hydraulic pressure is set to a level that the crushing edges at the tip of the fixed blade segments 14-1 to 14-5 lightly contact with the peripheral face of the rotating roll 12. The pressure is monitored visually or by other means whether the tip crushing edges of the fixed blade segments 14-1 to 14-5 lightly contact with the peripheral face of the rotating roll 12 while varying the pressure of hydraulic oil being supplied from a hydraulic pressure control device (not shown) to the ports 16a and 16b of the cylinder 16, and the hydraulic pressure in the light contact state is stored in the memory of the hydraulic pressure control device. After that, the hydraulic pressure is set based on thus stored value.

Once the hydraulic pressure is stored in the hydraulic pressure control device, automatic gap adjustment can be conducted in succeeding operations. Since the rubber block 19 has elasticity, even when the wear of the crushing edges at tip of the fixed blade segments 14-1 to 14-5 has differences, the magnitude of concavities on the face opposite to the respective portions (adhering face), varies in a manner that the portion having large wear moves more toward the peripheral face of the rotating roll 12 and that the portion having small wear moves less toward the peripheral face of the rotating roll 12.

According to the means to adjust gap according to the embodiment, the common rubber block 19 is inserted between the root of the fixed blade segments 14-1 to 14-5 structuring the fixed blade 14 and the pressing member 18 being fixed to the front end of the piston rod 17 of the single piston-cylinder mechanism 15. The configuration allows the single piston-cylinder mechanism 15 to adjust the gap automatically responding to the magnitude of wear of the respective crushing edges. Although Fig. 7 adopts a double-action hydraulic cylinder, the cylinder may be a single-action cylinder, a pneumatic cylinder, or an electric drive cylinder. The number of crushing edges in each of the fixed blade segments 14-1 to 14-5 may be two or more.

Figure 8 shows a cross sectional view of the means to adjust gap on the crusher according to the second embodiment. The structural elements other than the means to adjust gap in the crusher of the second embodiment are the same to those in the first embodiment. The means to adjust gap has the same quantity of small piston-cylinder mechanisms 15-1 to 15-5 to the quantity of the fixed blade segments 14-1 to 14-5, thus makes the tip face of the pressing member fixed to the front end of the piston rod directly press the root face of the fixed blade segments 14-1 to 14-5, respectively.

With the means to adjust gap having the above structure for the crusher of the second embodiment, the number of the piston-cylinder mechanisms increases. However, the pressing force applied to the fixed blade segments 14-1 to 14-5 can be separately adjusted by the respective piston-cylinder mechanisms 15-1 to 15-5, thus the gap adjustment for the individual fixed blade segments is more suitably attained than the first embodiment.

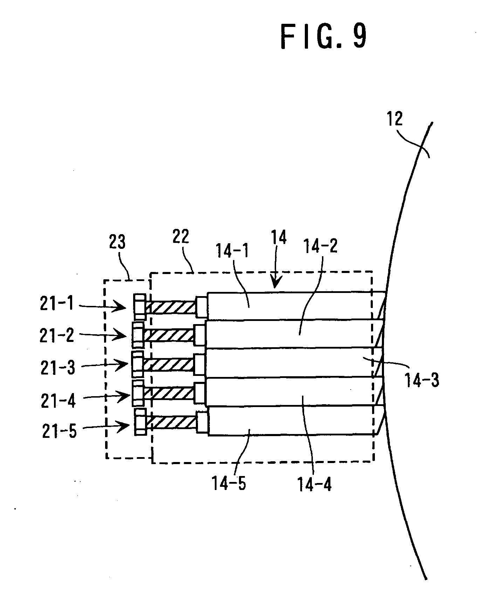

Figure 9 shows a cross sectional view of the means to adjust gap on the crusher according to the third embodiment. The structural elements other than the means to adjust gap in the crusher of the third embodiment are the same to those in the first embodiment.

The means to adjust gap has the same quantity of adjustment bolts 21-1 to 21-5 to the quantity of the fixed blade segments 14-1 to 14-5, thus makes the tip of the respective adjustment bolts 21-1 to 21-5 press the respective root faces of the respective fixed blade segments 14-1 to 14-5. The fixed blade 14 and the adjustment bolts 21-1 to 21-5 are stored and supported in a cassette 22. The cassette 22 is allowed to move front to rear by a push bolt (not shown) via (and together with) a bracket 23 mounted to the root face of the cassette 22.

According to thus structured present embodiment, separate adjustment of the press-in distance for each of the adjustment bolts 21-1 to 21-5 allows gap adjustment suitable for each of the fixed blade segments at a low cost without using various types of actuators.

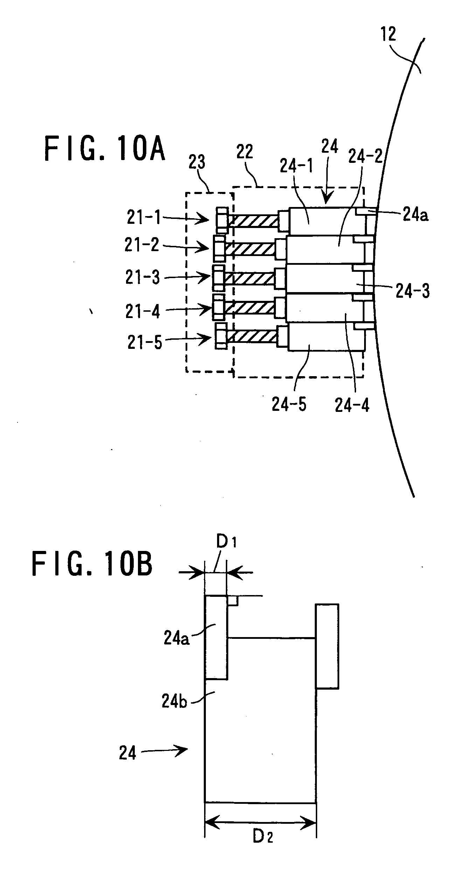

Figure 10 shows a cross sectional view of the means to adjust gap on the crusher according to the fourth embodiment. Although the crusher of the fourth embodiment has the same structure of the means to adjust gap to that of the third embodiment, the structure of the fixed blade differs. That is, similar to the fixed blade 14 of the first to third embodiments, the fixed blade 24 is divided into pluralities, (five in this embodiment), of fixed blade segments 24-1 to 24-5 each having a single crushing edge, and these fixed blade segments 24-1 to 24-5 are arranged in stacked state along the rotational direction of the rotating roll 12. However, there is a difference in the structure of the crushing edge positioned at tip of each of the fixed blade segments 24-1 to 24-5.

According to the first to third embodiments, the crushing edge at tip of each of the fixed blade segments 14-1 to 14-5 has an acute angle θ between the groove bottom and the tip of the fixed blade segment at a position of groove that firstly contacts with the peripheral face of the rotating roll 12, as illustrated in Fig. 2B. According to the fourth embodiment, however, as shown in Fig. 10B, the angle θ is right angle, and the width of the crushing edge 24a is constant from the tip thereof to the root thereof. Each of the fixed blade segments 14-1 to 14-5 in the first to third embodiments is structured integrally from the crushing edge at tip thereof to the root portion thereof. According to the fourth embodiment, however, the crushing edge 24a at tip portion is fixed to a holder 24b by welding or other means. The crushing edge 24a may be made of a commercially available sawteeth (made of spring steel, thickness D₁ of 0.6 mm). The saw teeth arranged along the saw body, (or arranged vertical direction to the paper of Fig. 10), are, however, not erecting in alternately different directions as in the commercial saw, but all the teeth are erecting in flat plane (or straight from the saw body). The thickness D₂ of the holder 24b is for example 6 mm, and the length thereof is for example 10 mm.

The procedure for adjusting the gap of the fixed blade segments 24-1 to 24-5 according to the fourth embodiment is the same to that of the third embodiment.
Since the width of the crushing edge 24a in the fourth embodiment is constant, even when the tip thereof is worn by contacting with the rotating roll 12, the width thereof is not increased, which increase is observed on the fixed blade segments 14-1 to 14-5 in the first to third embodiments. Consequently, it is prevented that the widened crushing edge induces linear-shaped chipped rubber, not being finely crushed.

When the crushing edge 24a is made by spring steel, the wear volume can be decreased. When the spring steel is applied, even when the crushing edge is strongly pressed against the peripheral face of the rotating roll 12, the crushing edge 24a elastically deforms to create an allowance, which gives easy gap adjustment.
In addition, there occurs no crimping even the groove formed between adjacent crushing edges 24a is in right angle similar to that in Fig. 2D. The reason is presumably the following. By making the thickness D₁ of the crushing edge 24a sufficiently smaller than the thickness D₂ of the holder 24b, the width of the groove formed between adjacent crushing edges 24a becomes wide. Thus, it is confirmed that the crushed chipped rubber enters the wide width groove. The plugging of groove with the chipped rubber creates a state similar to the formation of acute angle groove as shown in Fig. 2A. Also there is presumed a contribution of forming a large gap, corresponding to the above wide width groove, between the peripheral face of the rotating roll 12 and the fixed blade segment beneath the crushing edge 24a of the fixed blade segment 24-5 positioning at lower end of Fig. 10A.

The embodiment of chute of the crusher is described below referring to the drawings.

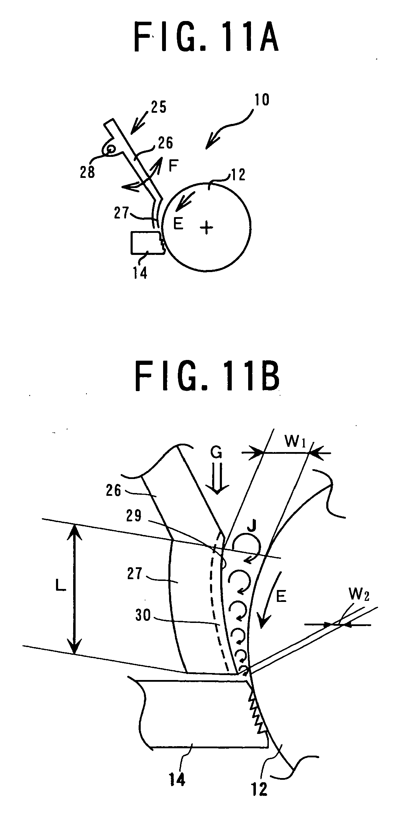

Figure 11 illustrates the structure of chute 25 for the crusher 10, guiding the chipped rubber G to the feed opening between the rotating roll 12 and the fixed blade 14. Figure 11A illustrates the whole structure of the chute 25, and Fig. 11B shows an enlarged view of the chute 25 at front part thereof (front part and surrounding parts). Similar to Fig. 2A, these figures are side view of the chute 25, viewed in the lateral direction to the axis of the rotating roll 12.

The chute 25 is structured by an almost flat root portion 26, and a front end portion 27 formed with a guide plane 29 which extends to the tip of the root portion 26, faces the peripheral face of the rotating roll 12, and has a curved shape gradually approaching to the downstream side of the rotational direction E of the rotating roll 12.
At the root portion 26, there is located a bearing for swinging 28. By a swinging means (not shown), the chute 25 freely swings around the swing axis parallel to the axis of the rotating roll 12, in arrow F direction. The swing motion allows the front end portion 27 of the chute 25 to come close to or leave from the rotating roll 12, thereby varying the gap between the guide plane 29 and the peripheral face of the rotating roll 12.

The guide plane 29 has pluralities of grooves 30 at a specified spacing extending in the extending direction of the guide plane 29 (the direction from the upper end to the bottom end of the guide plane 29), being arranged in the lateral direction to the extending direction of the guide plane 29 (normal to the paper of the figure). With the grooves 30, the chipped rubber G supplied to the root portion of the chute 25 drops into the groove 30 formed on the guide plane 29 at the front end portion 27, which is then guided to the lower part of the chute 25 by the groove 30. Consequently, the chipped rubber G more smoothly moves to lower part of the chute 25 than the case of no-grooves 30. The cross sectional shape of the groove is arbitrary such as half circle, polygon, and rectangle.

According to the crusher 10 of the embodiment, the chipped rubber G supplied to the root portion 26 of the chute 25 is guided along the surface of the root portion 26 obliquely downward. Once the chipped rubber G reaches the front end portion 27, it slides obliquely downward along the guide plane 29 gradually coming close to the peripheral face of the rotating roll 12. When the chipped rubber G comes close to the front end of the guide plane 29, it comes close to the peripheral face of the rotating roll 12, and the contact pressure against the chipped rubber G increases, which then increases more the friction force between the peripheral face of the rotating roll 12 and the chipped rubber G than the friction force between the guide plane 29 and the chipped rubber G. As a result, the chipped rubber G is to be bitten by the fixed blade 14 after moving in the arrow J direction in the gap between the peripheral face of the rotating roll 12 and the guide plane 29 of the chute 25. The efficiency of biting the chipped rubber G can be set to an adequate range by adjusting the gap through the adjustment of the swing angle of the chute 25 around the bearing for swinging 28. The set value of the swing angle may be selected by automatically setting an adequate gap for each size of the chipped rubber G by storing the observed values (described later) of biting efficiency for individual sizes of the chipped rubber G in advance.
Since the chipped rubber G drops into the groove 30, and is guided along the groove 30 obliquely downward, it does not move to the lateral direction (vertical to the paper) on the guide plane 29, which is observed in the case of non-groove 30. Thus the efficiency of biting the chipped rubber G further increases.

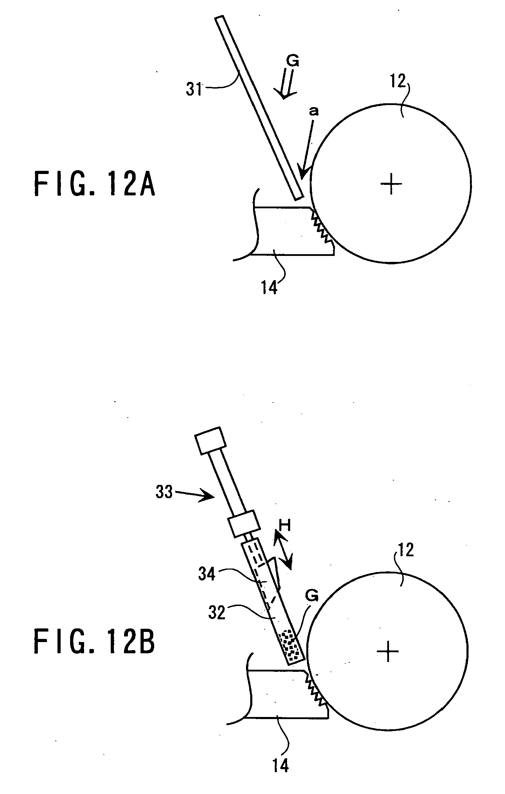

To prove the above-described effect of the chute, Examples 1 and 2, and Comparative Examples 1 to 3 were prepared, and the observed results of the biting efficiency are described below.
Example 1 has a structure illustrated in Fig. 11, applying the rotating roll 12 with 150 mm in diameter and 300 mm in length. As shown in Fig. 11B, the front end portion 27 has the length L of 50 mm, and the distances W₁ and W₂ between the guide plane 29 and the peripheral face of the rotating roll 12 at the upper end and the lower end of the front end portion 27 of 5 mm and 2 mm, respectively.
Comparative Example 1 has a structure having a chute 31 in flat or dustpan shape. The chute 31 guides the chipped rubber G to the inlet of the fixed blade 14, (to a position of the fixed blade 14 at downstream side of the rotational direction of the rotating roll 12). Comparative Example 2 has a structure having a dustpan shape chute 32 and a pusher 34 which is driven by a piston-cylinder mechanism 33 and is movable forward and rearward along the inner face of the chute 32 (arrow H direction). The pusher 34 presses-in the chipped rubber G on the surface of the chute 32. The size of each rotating roll 12 for above ones is the same to that of Example 1, 150 mm in diameter and 300 mm in length.
Example 2 has the same structure with that of Example 1, Fig. 11. The rotating roll 12, however, has 250 mm in diameter and 1000 mm in length, which is a prototype expecting the practical application. Comparative Example 3 has a structure illustrated in Fig. 12A, and the rotating roll 12 has 250 mm in diameter and 1000 mm in length, same to Example 2.

The rubber used in Example 1 and Comparative Examples 1 and 2 is #40 powder rubber mixed with 20% carbon (80% by weight of #40 powder rubber and 20% by weight of carbon). Table 2 shows the observed time of completing biting by supplying 100 g of rubber while rotating the rotating roll 12 at 370 rpm.

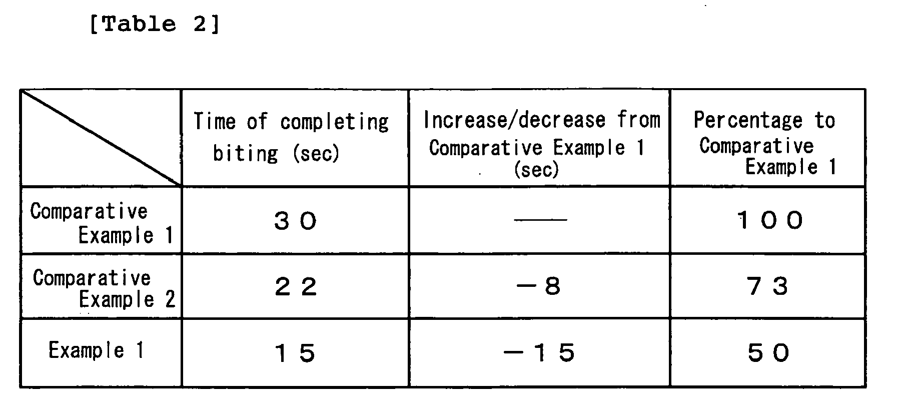

As given in Table 2, Comparative Example 1 took 30 seconds for biting the rubber completely by the fixed blade 14, and Comparative Example 2 took 22 seconds therefor. Example 1, however, took only 15 seconds therefor. With the chute 25 having a simple structure in which the guide plane 29 was formed so as the distance from the peripheral face of the rotating roll 12 to gradually narrow along the rotational direction of the rotating roll 12, the biting completed at about a half period from the time of the conventional type given in Fig. 12A, and at about two-thirds period from the time of the chute equipped with the pusher given in Fig. 12B. Thus the large effect is proved.

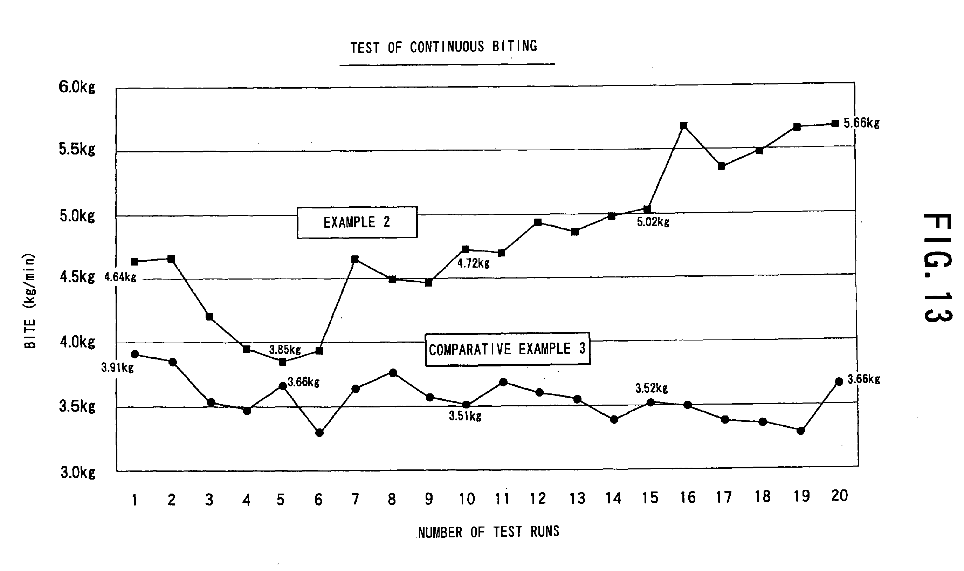

In Example 2 and Comparative Example 3, the rotating roll 12 was continuously rotated at 370 rpm, and the rubber having the same composition with that of Example 1 was continuously supplied. The weight of the rubber passing between the rotating roll 12 and the fixed blade 14 per one minute was measured. The measurement was repeated for 20 times. Figure 13 shows the result. As shown in the graph, the first biting gave the percentage of 119% (4.64 x 100/3.91), the tenth biting gave 134% (4.72 x 100/3.51), and 20th biting gave 155% (5.66 x 100/3.66), which proved significant improve in the biting efficiency. For the case of Comparative Example 3, the biting amount was constant at about 3.5 kg. For the case of Example 2, however, it was confirmed that the biting amount increased at or after 10th cycle from that in the first cycle.

The chute according to the above embodiments has the guide plane 29 in a curved shape, and the curved face is concave against the peripheral face of the rotating roll 12. The guide plane 29, however, may be flat or convex if only it has a shape of narrowing the distance from the peripheral face of the rotating roll 12 toward the rotating direction thereof. The solid body being crushed is not limited to the above elastic body such as rubber, and may be non-elastic body such as stone, concrete, and wood.

## Claims

1. A crusher finely crushing a solid body, comprising a rotating roll and a fixed blade facing the rotating roll, wherein the rotating roll has grooves arranged at an equal spacing on the peripheral face thereof extending in the direction of the rotation axis thereof, and the fixed blade has pluralities of grooves arranged at an equal spacing on a circumferential plane facing the peripheral face of the rotating roll, thus forming pluralities of crushing edges, thereby crushing the solid body supplied between the rotating roll and the fixed blade during the rotation of the rotating roll.

2. The crusher according to claim 1, wherein the pluralities of fixed blades are arranged in row facing the peripheral face of the rotating roll.

3. The crusher according to claim 1 or claim 2, wherein the rotating roll and the fixed blade are arranged not to substantially induce a gap between the faces of the rotating roll and the fixed blade facing with each other.

4. The crusher according to any of claims 1 to 3, wherein the groove of the fixed blade has a cross sectional shape to increase the depth in the direction of driving the solid body which is supplied between the rotating roll and the fixed blade from the circumferential plane of the fixed blade facing the peripheral face of the rotating roll, and to end at a wall face formed in the direction passing through the center of the rotating roll.

5. The crusher according to claim 4, wherein the width of the crushing edge of the fixed blade facing the rotating roll is smaller than the pitch of the grooves on the fixed blade.

6. The crusher according to claim 5, wherein the width of the crushing edge is from 0.5 to 5 mm, and the pitch of the grooves is from 1 to 20 mm.

7. A crusher comprising: a rotating roll having pluralities of grooves on the peripheral face thereon arranged in rows in the circumferential direction thereof, and extended in the direction of the rotation axis; a fixed blade composed of separate pluralities of fixed blade segments, each of which is equipped with one or more crushing edges, along a circumferential plane facing the peripheral face of the rotating roll; and a means to adjust a gap between the fixed blade and the peripheral face of the rotating roll facing thereto by displacing the fixed blade segment against the peripheral face of the rotating roll.

8. The crusher according to claim 7, wherein the means to adjust the gap has an actuator which is driven by hydraulic pressure or motor to conduct linear movement.

9. The crusher according to claim 8, wherein a common elastic body is inserted between the root of all the fixed blade segments and a single actuator.

10. The crusher according to claim 8, wherein individual actuators are arranged at the respective roots of the fixed blade segments.

11. The crusher according to claim 7, wherein the means to adjust the gap is a bolt positioned at each root of the fixed blade segments.

12. A crusher comprising: a rotating roll having pluralities of grooves on the peripheral face thereof arranged in rows in the circumferential direction thereof, and extended in the direction of the rotation axis; a fixed blade composed of pluralities of crushing edges arranged along a circumferential plane facing the peripheral face of the rotating roll; and a chute which makes the crushing object drop by sliding therein toward the backward end of the fixed blade in the rotating direction of the rotating roll, wherein the gap between the guide plane of the chute facing the peripheral face of the rotating roll to make the crushing object drop by sliding thereon and the peripheral face of the rotating roll is formed to shrink in the forward direction of rotation.

13. The crusher according to claim 12, wherein the guide plane has pluralities of grooves extending in the direction of upper end and lower end thereof in rows from left to right thereof.

14. The crusher according to claim 12, wherein a means to adjust gap for displacing the chute so as to vary the gap between the guide plane and the peripheral face of the rotating roll.

15. The crusher according to claim 14, wherein the means to adjust gap is a means to swing the chute around the swing axis parallel to the axis of the rotating roll.

16. A method for finely crushing a solid body, comprising the steps of: supplying a chip-shaped solid body to a crusher composed of a rotating roll and a fixed blade; crushing the solid body discharged from the crusher by re-charging to the crusher; repeating the crushing step for the re-charged solid body for specified times, and then classifying the crushed solid body discharged from the crusher depending on the particle sizes; and storing the classified crushed solid body.

17. The method for finely crushing the solid body according to claim 16, wherein the step of crushing further has the steps of: rough-finishing by crushing treatment using a rotating roll having grooves thereon with a groove width for rough-finishing; and finishing by crushing treatment using a rotating roll having grooves thereon with a groove width for finishing, narrower than the groove width for rough-finishing, wherein the step of rough-finishing and the step of finishing are conducted by a specified number of stages of crushers, respectively.

18. The method for finely crushing the solid body according to claim 16 or claim 17, wherein the step of crushing further has the step of adding an anti-coagulation agent.
